# FASCICULE DE BREVET EUROPEEN

(11) **EP 1 258 186 B1**
(45) Date de publication et mention de la délivrance du brevet: **16.02.2005**
(21) Numéro de dépôt: 02291220.8
(22) Date de dépôt: 17.05.2002
(51) Int. Cl.: A01D 45/00

(54) **Machine pour le ramassage automatique des asperges**
Vorrichtung zum automatisches Ernten von Spargel
Device for automatic harvesting of asparagus

(30) Priorité: 18.05.2001 FR 0106554
(43) Date de publication de la demande: 20.11.2002
(73) Titulaire: Kirpy, 47390 Layrac (FR)
(72) Inventeur: Lenoir, François, 33200 Bordeaux (FR); Villes, Christian, 47600 Nerac (FR); Camal, Paul, 47600 Nerac (FR)
(74) Mandataire: Laget, Jean-Loup

(56) Documents cités:
- EP-A- 0 770 321
- DE-A- 19 847 426
- US-A- 1 578 162
- US-A- 4 064 682
- US-A- 4 425 751

## Description

La présente invention est relative à une machine destinée à réaliser le ramassage automatique des plantes poussant en terre, telles par exemple que des carottes ou des asperges.

Dans les explications qui vont suivre, l'exemple choisi pour la mise en oeuvre de l'invention est une machine adaptée au ramassage d'asperges cultivées en buttes de section sensiblement trapézoïdale ; mais il doit être compris que ce mode de mise en oeuvre n'est donné qu'à titre d'exemple non limitatif.

Les buttes d'asperges sont, en général, recouvertes d'une feuille de plastique noire, qu'il faut d'abord enlever ; ce après quoi les asperges, qui pointent de un à quelques centimètres au-dessus de la surface supérieure de la butte, sont cueillies manuellement au moyen de gouges que l'on enfonce dans le sol pour les couper à une profondeur telle qu'elles aient une longueur supérieure à 25 cm de long ; puis la butte est recouverte à nouveau de son film plastique noir.

Comme, pendant la saison de production, les asperges poussent de façon ininterrompue, cela a pour conséquence qu'il faut, de façon répétitive, renouveler dans des espaces de temps très courts (de l'ordre d'une journée), les opérations ci-dessus décrites.

Cela entraîne des frais de main d'oeuvre considérables et il arrive même que, faute d'une main d'oeuvre assez nombreuse, des récoltes soient perdues.

Il existe des machines, automotrices ou non, constituées par un châssis enjambeur, qui enjambe la butte et comporte des moyens pour soulever la bande de film plastique, la faire passer au-dessus dudit châssis et la remettre en place ensuite.

Comme décrit dans le brevet EP 0 922 382, des sièges sont disposés sur les côtés du châssis enjambeur, pour que les personnes chargées de la cueillette puissent travailler en position assise, à proximité de la surface supérieure de la butte, ce qui procure un gain de temps non négligeable.

Les moyens pour soulever et remettre le film plastique en place étant connus, ne font pas l'objet de la présente invention, qui concerne des moyens automatiques pour détecter la présence d'une plante poussant dans le sol, la localiser avec précision et amener à la verticale de ladite plante des moyens mécaniques de cueillette.

Dans le brevet français 2.495.432 du 9 décembre 1980, on a décrit une machine comprenant un châssis mobile, sur quatre roues, enjambant la butte d'asperges, portant un dispositif mécanique de saisie des asperges comprenant une pince mobile en translations verticale et horizontale, le dispositif de détection des asperges comprenant un système à caméra et un système d'éclairage à contre-jour de façon à actionner un micro-processeur qui actionne les mouvements de translation de la pince.

Dans le brevet antérieur EP 0 770 321, on a décrit un engin enjambeur portant des moyens permettant de détecter la distance de l'asperge se trouvant encore intégralement sous la terre, par rapport à la surface de la terre.

Dans le brevet DE 19847426 on a décrit une machine pour le ramassage automatique des plantes poussant dans la terre qui correspond au préambule de la revendication 1.

Ces dispositifs sont très coûteux et leur fonctionnement aléatoire.

La présente invention est basée sur l'emploi de palpeurs mécaniques qui sont déplacés lorsqu'ils arrivent au contact physique avec une asperge, ce déplacement étant repéré afin de localiser exactement la position de l'asperge, ce après quoi un outil de cueillette est amené à la verticale de la position repérée et est mis en oeuvre pour cueillir l'asperge.

Il existe de nombreux moyens mécaniques qui peuvent s'enfoncer verticalement dans le sol pour couper sa tige de façon qu'elle ait une longueur d'au moins 25 cm, ces moyens mécaniques ne font pas partie de la présente invention et ne seront pas décrits.

La machine à récolter selon la présente invention est constituée par un véhicule porteur enjambeur qui porte une rangée transversale de palpeurs verticaux dont l'extrémité inférieure se trouve au ras du sol, ces palpeurs étant placés côte à côte de façon analogue à un peigne leur écartement étant très faible, de l'ordre du millimètre, pour qu'une plante dépassant le sol ne puisse pas passer entre deux palpeurs adjacents ; chaque palpeur pouvant se déplacer en arrière lorsqu'il vient au contact physique d'une plante ; le véhicule porteur comportant d'une part des moyens permettant de déterminer le palpeur qui a été déplacé par la plante et d'autre part, des moyens pouvant effectuer une translation horizontale pour arriver à l'endroit où se trouve le palpeur actionné, ces movens portant un outil de cueillette.

Dans la description qui va suivre, la plante dépassant du sol est une asperge, mais peut être tout autre type de plante poussant dans la terre.

L'invention peut avantageusement comporter l'une ou l'autre des dispositions suivantes :
a). le peigne est constitué par un ensemble de tiges verticales juxtaposées, portées à rotation sur une barre transversale portée par le véhicule ;
b). chaque tige est munie d'un contrepoids réglable pour lui conférer une certaine résistance au basculement ;
c).le peigne est constitué par une rangée de tiges verticales juxtaposées pouvant coulisser le long d'un arbre porteur à l'encontre d'un ressort ;
d). le peigne est constitué par une rangée de tiges verticales juxtaposées, chacune constituant le côté d'un parallélogramme déformable ;
e). la déformation du parallélogramme se fait à l'encontre d'un ressort à tarage réglable ;
f). l'un des côtés verticaux du parallélogramme vertical est muni d'un contrepoids réglable ;
g). l'extrémité de chaque palpeur est munie de conduits amenant de l'air comprimé ;
h). devant les conduits d'air comprimé, sont disposées des tiges rigides s'enfonçant légèrement dans le sol ;
i). de préférence, les extrémités des tiges, qu'elles soient basculantes, coulissantes ou montées sur parallélogramme déformable, sont munies à leur extrémité d'une palette qui vient en contact avec la plante ;
j). les tiges rigides s'enfonçant légèrement dans le sol sont fixées de façon réglable à l'arrière des palettes ;
k). les conduits d'air comprimé sont disposés de façon que leurs extrémités soient dirigées vers les extrémités des tiges rigides, un peu au-dessus ;
l). le déplacement d'une tige du peigne provoque l'arrêt du véhicule porteur ;
m). l'arrêt du véhicule est provoqué par un contact électrique actionné par la tige, les contacts étant montés électriquement de telle façon que le contact actionné soit individualisé dans une boîte de commande qui localise le contact actionné ;
n). un faisceau de cellule photo-électrique est placé à l'arrière des tiges formant le peigne, de sorte que la tige qui se déplace au contact d'une asperge interrompe le faisceau lumineux qui envoie le signal d'arrêt de la machine et déclenche le déplacement transversal, parallèlement au peigne, d'un chariot portant les moyens d'identification de la tige ayant été déplacée, ainsi qu'un outil d'extraction de l'asperge.
o). le moyen d'identification est un détecteur de proximité qui identifie la partie haute de la tige qui a basculé et arrête le mouvement latéral du chariot ;
p). l'outil d'extraction porté par le chariot transversal se trouvant à une certaine distance en avant de la rangée de tiges et donc en avant de l'asperge détectée, le châssis qui porte le chariot transversal est reculé de cette distance pour que l'outil d'extraction se trouve à la verticale de l'asperge.

A titre d'exemple illustratif et non limitatif, on a représenté aux dessins annexés :
Figure 1 une vue schématique en perspective d'un exemple de réalisation de l'invention,
Figure 2 une vue arrière en élévation du dispositif de la Figure 1,
Figure 2a une vue partielle de la figure 2 illustrant une variante de réalisation,
Figure 3 une vue en élévation latérale du dispositif de la Figure 1,
Figure 4 une vue de détail de deux palettes munies de jets d'air.
Figure 5a et 5b deux vues illustrant une variante de réalisation de la tige basculante des figures 1 à 4.
Figure 6 une vue en perspective illustrant une deuxième variante de réalisation de la tige dont le peigne transversal est constitué.
Figure 7 une vue en élévation latérale illustrant une troisième variante de réalisation de la tige dont le peigne transversal est constitué.
Figure 8 une vue en perspective illustrant une modification de la troisième variante de la figure 7.

Dans les figures, le châssis enjambeur ainsi que les moyens permettant de soulever le film plastique et de le remettre en place, après le passage de la machine ne sont pas illustrés ni décrits car ils peuvent être de type connu, comme par exemple ceux représentés dans la demande de brevet EP 0 922 382. De même le véhicule porteur peut être quelconque comme celui des brevets FR 2.495.432 ou EP 0 770 321 par exemple.

Le dispositif selon l'invention, porté par des moyens appropriés, se déplaçant sur le sol 1, passe au-dessus d'une butte 2 à l'intérieur de laquelle sont plantées et poussent les asperges ou autres plants.

De façon conventionnelle la butte 2 est de forme trapézoïdale et comporte deux côtés inclinés 3 et une face supérieure, pratiquement plane 4. Ce procédé peut s'appliquer à une récolte en planches.

Le véhicule porteur (non représenté) qui enjambe la butte 2 porte un châssis mobile désigné par la référence générale 10.

Le châssis 10 comporte deux coulisseaux 12 pouvant se déplacer le long de deux rails fixes 11, portés par la machine, sous l'action d'au moins un vérin hydraulique 13 (deux dans l'exemple représenté), ou d'un autre moyen de pneumatique ou translation (pignon/crémaillère ou autre).

Chaque coulisseau 12 porte, à chacune de ses extrémités, une poutrelle verticale 14a et 14b.

Les poutrelles verticales 14a et 14b portent des rails horizontaux et transversaux 15 et 16 disposés l'un au-dessus de l'autre.

Dans l'exemple représenté les rails 15 et 16 d'une paire ont une section en U et se font face de façon à emprisonner les roues 17 d'un chariot 18.

Les poutrelles 14a portent également une poutrelle transversale 19 par des moyens qui permettent de la régler en hauteur.

Cette poutrelle transversale 19 porte un arbre 20 sur lequel sont montées à pivotement et en position verticale une pluralité de tiges 21.

Chaque tige 21 est munie à son extrémité inférieure d'une palette 22. La largeur des palettes 22 est telle qu'il n'existe qu'un très faible jeu, de l'ordre de 1 à 2 millimètres entre lesdites palettes.

Dans l'exemple représenté il y a trente et une tiges 21,mais ce nombre n'est pas significatif, il faut que la rangée des palettes 22 soit un peu plus longue que la largeur de la partie supérieure, horizontale 4, de la butte 2 et forme une sorte de peigne.

Chaque tige 21 est munie à sa partie supérieure d'une palette 23, qui est horizontale.

La poutrelle transversale 19 est ajustée en hauteur de façon que les palettes 22 passent au ras du sol de la partie 4 de la butte 2 sans la toucher.

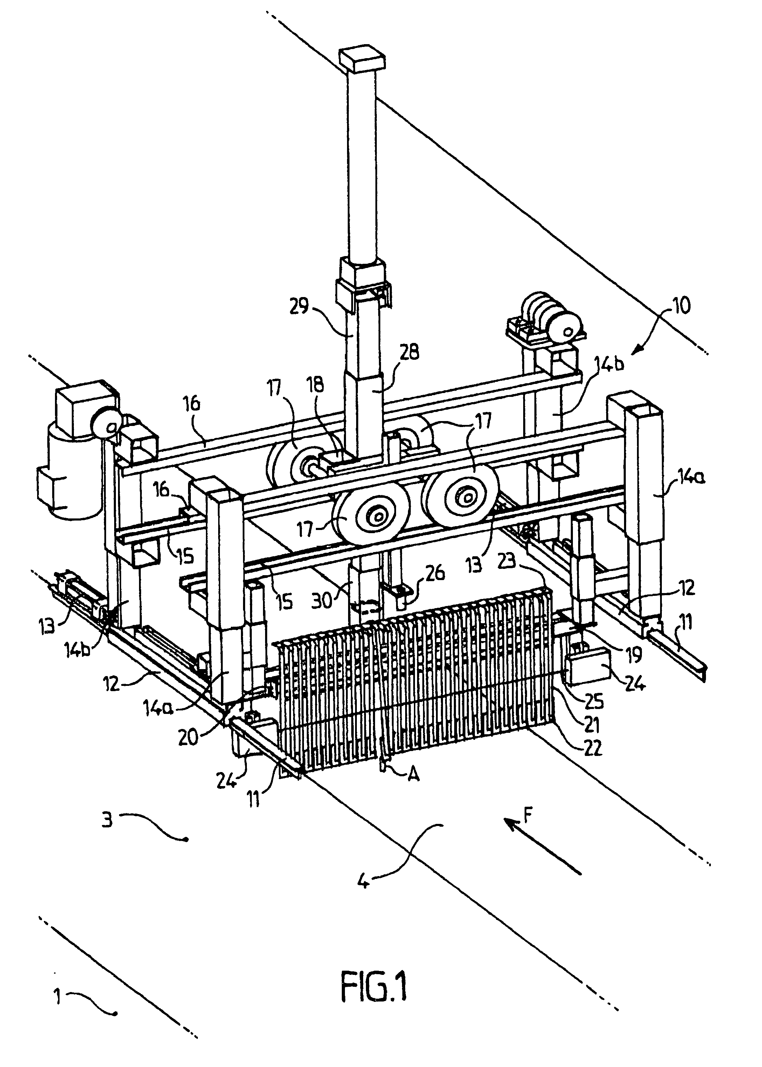

Lors du déplacement de la machine selon la flèche F, une asperge A vient heurter une palette 22 (la douzième en partant de la gauche sur la Figure 1), de sorte que la tige 21 qui porte la palette 22, bascule vers l'arrière.

En basculant ainsi vers l'arrière, la tige 21 vient couper le faisceau lumineux d'un système à cellule photo-électrique, qui est représenté sur la Figure 1 par un trait.

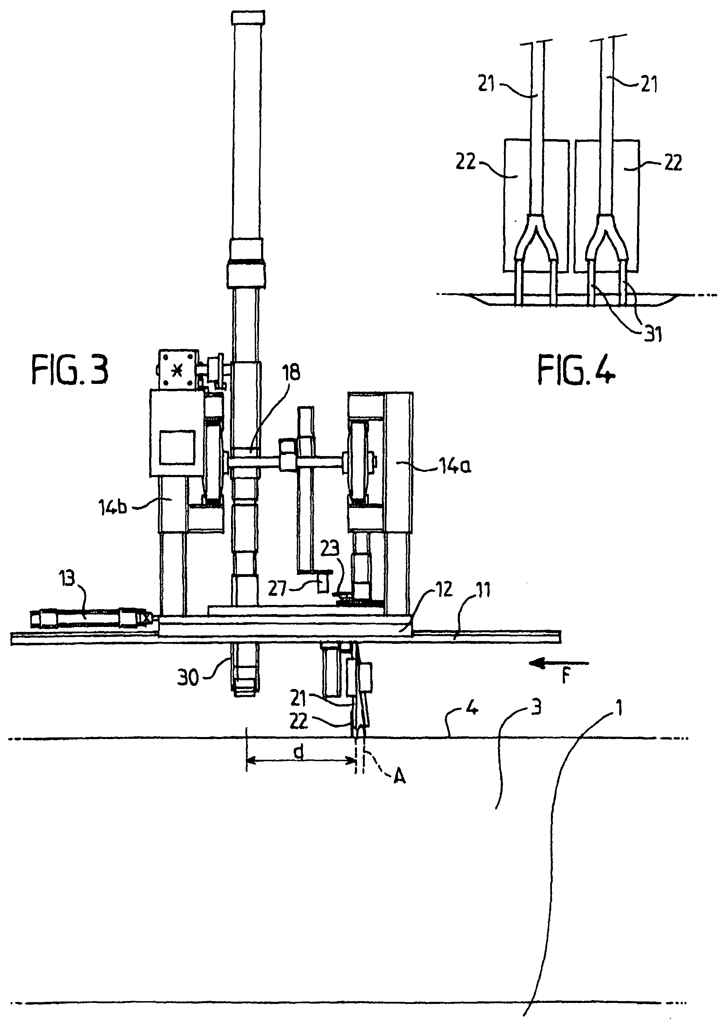

La rupture du faisceau lumineux déclenche un signal qui arrête la machine, dans la position représentée aux Figures 1 et 3.

Ce signal met ensuite en marche le chariot 18 qui se déplace transversalement sur les rails 15 et 16.

Le chariot 18 est muni d'un système de détection 26, un détecteur de proximité tel qu'un détecteur magnétique par exemple, qui repère la palette 23 qui s'est déplacée vers l'avant lorsque la tige 21 qui la porte a basculé vers l'arrière.

Le détecteur émet un signal qui provoque l'arrêt du chariot 18.

La position exacte de l'asperge ou plante A est alors repérée.

Le chariot 18 porte un tube vertical 28 à l'intérieur duquel coulisse un tube 29 qui est muni à son extrémité d'un outil 30 destiné à récolter l'asperge.

Mais, comme on le voit clairement à la Figure 3, au moment où le chariot 18 s'arrête, l'outil n'est pas à la verticale de l'asperge A, il se trouve à une distance "d" en avant de l'asperge A.

En conséquence, lorsque le déplacement latéral du chariot 18 est interrompu, un signal provoque le déplacement vers l'arrière du châssis 10 au moyen des vérins 13 d'une distance égale à "d" ; de sorte que l'outil 30 se trouve exactement à la verticale de l'asperge A.

Un signal actionne alors la descente du tube 29 et de son outil 30.

Dans l'exemple représenté on utilise deux moyens pour localiser l'asperge A : un premier moyen qui détecte qu'une tige 21 a été déplacée et un deuxième moyen porté par le chariot 18 pour détecter la palette 23 de la tige 21 qui a basculé.

Mais il serait possible de disposer en face des palettes 23 une rangée de contacts qui seraient actionnés directement par lesdites palettes. Ainsi la tige 21 qui bascule actionnerait un contact ce qui localiserait immédiatement ladite tige.

La Figure 4 concerne un perfectionnement. Il peut en effet arriver qu'une asperge ne dépasse pas assez du sol pour faire basculer une tige, ou même qu'elle soit à quelques millimètres de la surface et ne soit donc pas détectée.

Pour pallier cet inconvénient on dispose au bas de chaque palette 22 au moins un et de préférence deux tubes rigides 31 qui sont creux et alimentés en air comprimé.

Ces deux tubes 31 dépassent de quelques millimètres en dessous de la base des palettes 22.

On règle la hauteur de la poutrelle 19 de façon que ces tubes 31 soient enfoncés dans le sol de l'ordre de 1 à 2 millimètres et lorsque la machine avance de l'air comprimé est envoyé dans les tubes 31.

Comme en général, les asperges sont cultivées dans des terrains sableux, ces jets d'air comprimé chassent la terre et déchaussent les asperges sur une profondeur d'environ un centimètre.

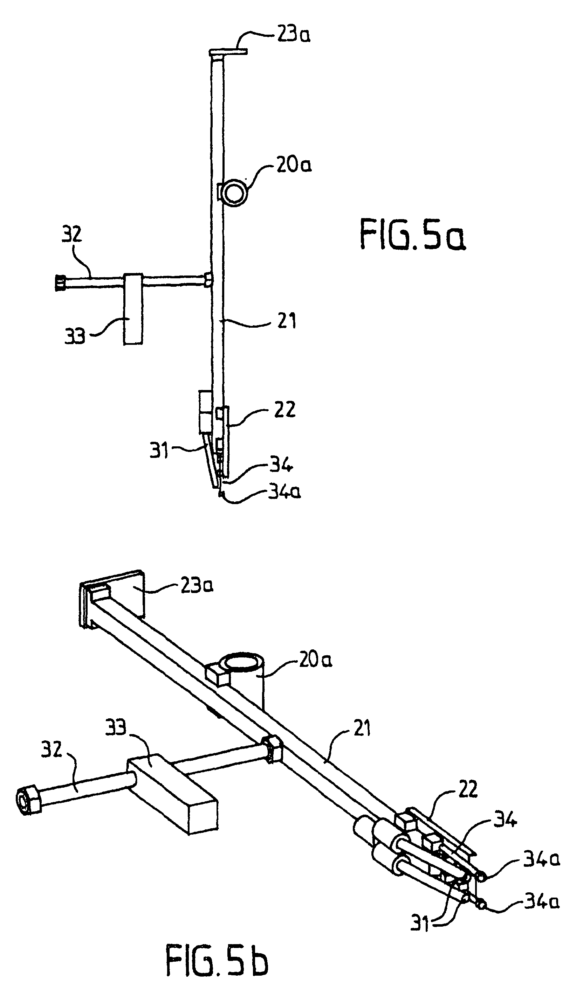

La figure 5 illustre un autre mode de réalisation des tiges 21.

Chaque tige 21 est montée à rotation sur l'arbre transversal porteur 20 par un tube 20a. A son extrémité supérieure, elle est munie d'une plaquette 23a qui facilite sa détection par l'organe de détection 26 porté par le chariot 18.

A une certaine distance de son articulation sur l'arbre porteur 20, une tige 32, portant un contrepoids 33 est vissée à l'arrière de la tige 21.

La position de ce contrepoids 33 le long de la tige 32 est réglable à volonté ce qui permet de régler la force de rappel agissant sur la tige 21.

Derrière la palette 22 qui se trouve à l'extrémité inférieure de la tige 21, sont disposées deux tiges rigides 34 dont on peut régler la position en hauteur par rapport à la palette 22 c'est-à-dire la longueur dont ces tiges 34 vont pénétrer dans le sol. Les tuyaux d'arrivée d'air comprimé 31 sont placés derrière les tiges 34.

Les tiges 34 sont réglées de façon à s'enfoncer d'environ 1cm/1,5 cm dans le sol ; les tubes 31 sont disposés de façon légèrement oblique vers l'avant, leurs extrémités étant disposées de façon que l'air comprimé soit soufflé sur les extrémités des tiges 34, qui peuvent avantageusement comporter un bourrelet 34a comme cela est représenté.

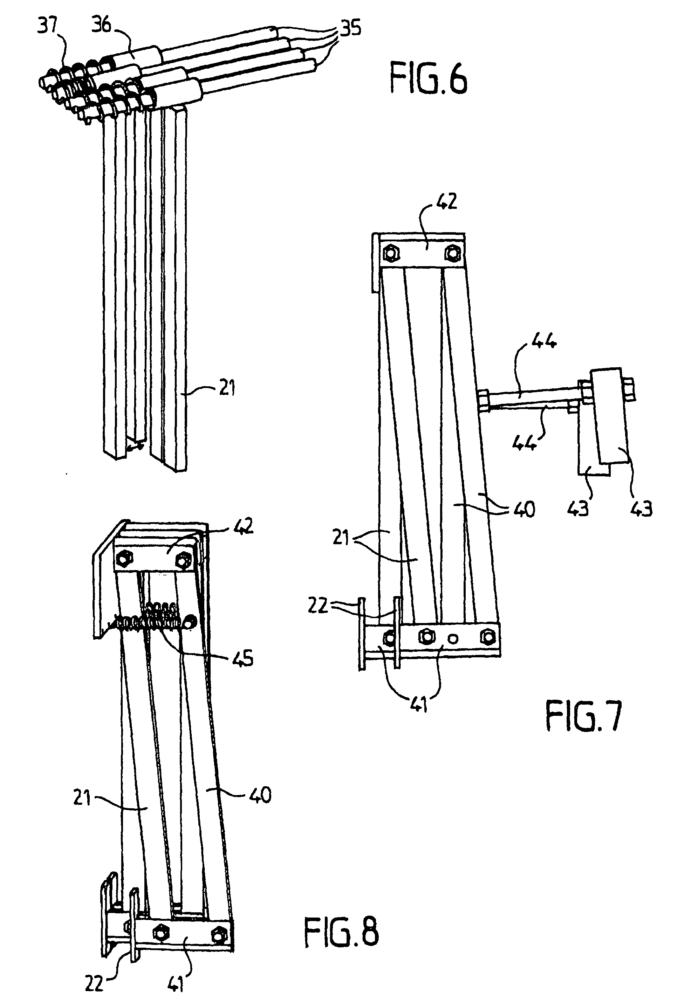

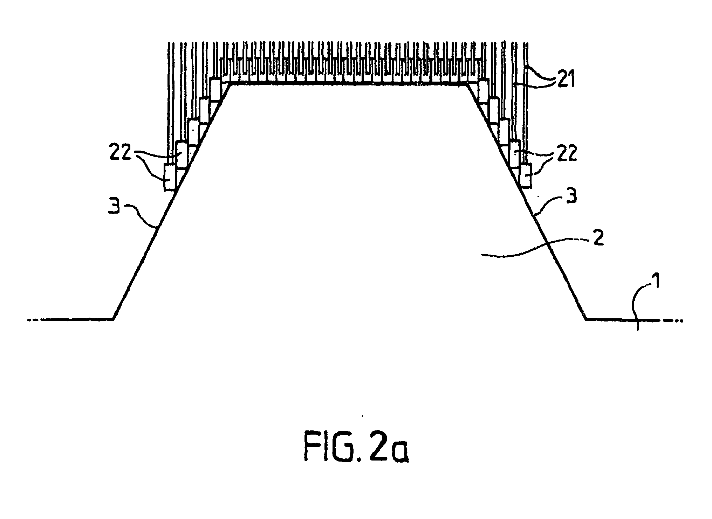

La figure 6 illustre une autre variante de réalisation du peigne constituée par les tiges 21 placées côte à côte.

Selon cette variante, les tiges 21 ne sont pas basculantes, mais coulissantes.

Au lieu d'être portées à pivotement par un arbre transversal horizontal 20, elles sont portées par une pluralité d'arbres 35 horizontaux, mais placées côte à côte dans le sens longitudinal. Les tiges 21 sont munies à leur extrémité supérieure, de tubes creux 36 qui coulissent sur leur arbre porteur 35 à l'encontre d'un ressort de rappel 37. Bien que cela ne soit pas représenté, les tubes 36 peuvent porter des moyens qui facilitent leur détection par un détecteur de proximité.

Les palettes 22 des tiges 21 de la figure 6 peuvent évidemment être munies des moyens de soufflage d'air comprimé selon les figures 4, 5a et 5b.

Les figures 7 et 8 représentent une autre variante de réalisation du peigne constitué par les tiges 21.

Selon cette variante, chaque tige 21 constitue l'un des côtés d'un parallélogramme déformable 21, 40, 41, 42 dont le côté supérieur horizontal 42 est fixé à un support 45 transversal et horizontal porté par le chariot 18.

Lorsqu'une palette 22 heurte une asperge (ou autre plante), elle recule en demeurant parallèlement à elle-même.

Le moyen de rappel du parallélogramme peut être : soit un contrepoids 43 porté par une tige 44 de façon analogue à ce qui a été décrit aux figures 5a et 5b ; soit un ressort de rappel 45.

Là encore, les palettes 22 des tiges 21 des figures 7 et 8 peuvent évidemment être munies de moyens de soufflage d'air comprimé analogues à ceux décrits en relation avec les figures 4, 5a, 5b.

Comme indiqué plus haut, l'invention peut être employée pour le ramassage d'autres plantes.

Dans le cas de carottes par exemple, on peut faire passer d'abord une machine qui fauche et ramasse les fanes de carottes de carottes de sorte que ne fassent saillie hors du sol, que les extrémités desdites carottes. Il suffit alors de disposer le châssis 10 avec les accessoires qu'il porte (tiges 21, moyens de détection, outil 30) sur un véhicule porteur qui passe au-dessus des plants de carottes.

On pourrait aussi utiliser les moyens de l'invention pour d'autres plantes, telles que des radis, des oignons et même éventuellement des poireaux.

On s'est aperçu, à l'expérience, qu'il y avait des asperges qui faisaient saillie sur la partie haute des parois obliques 3 de la butte 2.

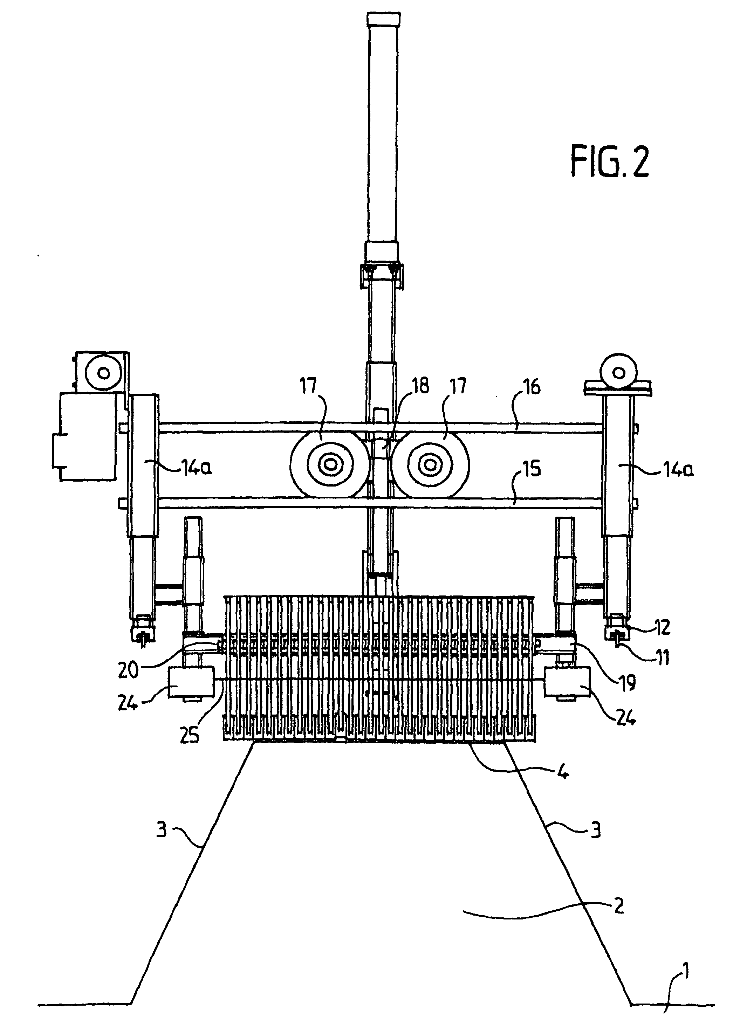

On peut alors, comme cela est représenté à la figure 2a prolonger latéralement la rangée de palettes 22 en allongeant les tiges 21 de façon que les palettes d'extrémités 22 épousent la pente de la partie supérieure des parois latérales obliques 3.

## Revendications

1. Machine pour le ramassage automatique des plantes poussant dans la terre, que ce soit en planches ou en buttes, du type portée par un véhicule moteur enjambeur et comportant un châssis mobile (10), porté par un châssis enjambeur, ledit châssis mobile (10) comportant des moyens (21) qui provoquent l'émission d'un signal lorsqu'ils arrivent au contact d'une plante (A) ; des moyens qui détectent l'emplacement du moyen qui est en contact avec ladite plante et des moyens qui amènent un outil (30) à la verticale de la plante ainsi localisée, **caractérisée par le fait que** ledit véhicule porte une rangée transversale de palpeurs verticaux (21) dont l'extrémité inférieure se trouve au ras du sol, ces palpeurs (21) étant placés côte à côte de façon analogue à un peigne, leur écartement étant suffisamment faible pour qu'une plante dépassant du sol ne puisse pas passer entre deux palpeurs (21) adjacents ; chaque palpeur (21) pouvant se déplacer en arrière lorsqu'il vient au contact physique d'une plante ; le véhicule porteur comportant d'une part des moyens permettant de déterminer le palpeur (21) qui a été déplacé par la plante et d'autre part, des moyens de translations horizontale et longitudinale portant un outil de cueillette (30) afin de l'amener à la verticale de la plante détectée par le palpeur (21).

2. Machine selon la revendication 1, **caractérisée par le fait que** ledit écartement des palpeurs est de l'ordre de 1 mm.

3. Machine selon la revendication 2, **caractérisée par le fait qu'**elle est destinée au ramassage des asperges cultivées en buttes (2) sensiblement trapézoïdale comportant deux parois latérales (3) sensiblement obliques et une paroi supérieure (4) pratiquement plane d'où font saillie les asperges.

4. Machine selon la revendication 3, dans laquelle les palpeurs qui émettent un signal en heurtant une asperge ou une plante sont constitués par une rangée de tiges verticales(21) portées de façon à former un peigne ; de telle sorte que lorsqu'une tige (21) heurte une asperge elle recule vers l'arrière.

5. Machine selon la revendication 4, dans laquelle les tiges (21) verticales, juxtaposées, sont portées par un arbre transversal et horizontal (20) lui-même porté par le châssis (10) de telle sorte que lorsqu'une tige (21) heurte une plante, elle bascule vers l'arrière.

6. Machine selon la revendication 5, dans laquelle, en basculant la tige (21) agit sur un contact ce qui détermine quelle est la tige qui a basculé et donc la position de l'asperge.

7. Machine selon la revendication 5, dans laquelle, en basculant vers l'arrière la tige (21) génère un signal, qui provoque l'arrêt de la machine, par exemple au moyen d'une cellule photo-électrique.

8. Machine selon la revendication 7, dans laquelle le signal ayant provoqué l'arrêt de la machine, met en action un chariot (18) qui se déplace le long de la rangée de tiges (21) pour détecter celle qui a basculé.

9. Machine selon la revendication 8 dans laquelle le chariot à déplacement transversal (18) porte un détecteur de proximité (26) pour détecter la tige (21) qui a basculé, ce moyen émettant, lorsqu'il a détecté la tige (21), un signal immobilisant le chariot (18).

10. Machine selon l'une quelconque des revendications 1 à 9 dans laquelle chaque tige (21) comporte à sa partie basse une palette verticale (22) destinée à venir en contact avec une asperge et à sa partie haute une palette horizontale (23) destinée à être détectée par un détecteur de proximité (26).

11. Machine selon la revendication 10, dans laquelle les palettes inférieures (22) ont une largeur telle qu'elles ne laissent entre elles qu'un jeu infime de l'ordre de 1 à 2 mm.

12. Machine selon l'une quelconque des revendications précédentes, dans laquelle le chariot (18) porte un outil (30) pour cueillir l'asperge, cet outil étant porté à l'extrémité inférieure d'un tube (29) coulissant dans un tube vertical (28) porté par le chariot (18).

13. Machine selon la revendication 12, dans laquelle l'outil (30) est porté par le chariot (18) de façon à être situé à une distance "d" en avant de la rangée de tiges et de palettes (21, 22).

14. Machine selon la revendication 13 dans laquelle, lorsque l'emplacement de la tige (21) ayant basculé a été déterminé par l'arrêt du déplacement latéral du chariot (18), un signal provoque le déplacement vers l'arrière du châssis (10) de ladite distance "d" de façon que l'outil (30) se trouve à la verticale de la plante ou asperge (A).

15. Machine selon la revendication 5, dans laquelle les tiges (21) sont munies d'un contrepoids (33) dont la position est réglable afin d'exercer une force de rappel sur la tige qui a été déplacée.

16. Machine selon la revendication 4, dans laquelle les tiges (21) verticales, juxtaposées, formant un peigne, sont portées chacune, par un manchon (36) pouvant coulisser le long d'un arbre porteur (35) horizontal et parallèle à l'axe longitudinal tout en étant soumis à l'effet d'un ressort de rappel (37).

17. Machine selon la revendication 4, dans laquelle les tiges (21) verticales, juxtaposées, formant un peigne, sont chacune portées par un parallélogramme déformable (21, 40, 41, 42).

18. Machine selon la revendication 17, dans laquelle le parallélogramme déformable (21, 40, 41, 42) est soumis à une force de rappel exercée soit par un contrepoids (43) à position réglable, soit par un ressort (45).

19. Machine selon l'une quelconque des revendications précédentes, dans laquelle le châssis (10) est monté à coulissement sur deux rails (11) portés par le châssis enjambeur, le coulissement du châssis (10) sur ses rails (11) étant commandé par deux vérins (13) ou analogue.

20. Machine selon la revendication 19 dans laquelle le châssis mobile (10) est constitué par deux coulisseaux (12) pouvant coulisser le long des rails (11), chaque coulisseau (12) portant une poutrelle avant (14b) et arrière (14a) les paires de poutrelles (14a et 14b) portant deux rails transversaux (15 et 16) sur lesquels se déplacent des roues (17) portant le chariot (18).

21. Machine selon la revendication 20 dans laquelle les deux poutrelles arrière (14a) portent une poutrelle transversale horizontale réglable en hauteur, cette poutrelle transversale portant l'arbre transversal (20) sur lequel sont montées à pivotement les tiges (21).

22. Machine selon l'une quelconque des revendications précédentes dans laquelle chaque palette (22) située à la base d'une tige (21) est munie d'au moins un et de préférence deux tubes creux rigides (31) alimentés en air comprimé.

23. Machine selon la revendication 22 dans laquelle les tubes (31) dépassent la base de chaque palette de quelques millimètres, la poutrelle transversale (19) étant réglée de façon qu'ils s'enfoncent dans le sol de quelques millimètres, les jets d'air comprimé chassant le sable et déchaussant les asperges sur environ un centimètre de profondeur.

24. Machine selon les revendications 22 et 23, dans laquelle chaque palette (22) porte, sur sa face arrière, deux tiges rigides (34) dont on peut régler la position en hauteur par rapport à la palette (22) ; les tuyaux d'arrivée d'air comprimé (31) étant placés derrière les tiges rigides (34).

25. Machine selon la revendication 15, dans laquelle les tiges rigides (34) sont réglées de façon à s'enfoncer d'environ 1 cm/1,5 cm dans le sol ; les tubes (31) étant disposés obliquement vers l'avant, de sorte que l'air comprimé soit soufflé sur les extrémités des tiges (34) ; qui peuvent comporter un bourrelet (34a).

26. Machine selon l'une quelconque des revendications précédentes, dans laquelle les extrémités des palettes (22) sont alignées pour être parallèles au sommet plat (4) de la butte.

27. Machine selon la revendication 26, comportant de chaque côté de la rangée horizontale de palettes (22) des tiges (21) allongées de façon que les palettes (22) portées par ces tiges (21) allongées puissent épouser la pente des parois obliques (3).

## Patentansprüche

1. Maschine zur automatischen Ernte von Pflanzen, die im Boden wachsen, sei es in Flachoder Hügelbeeten, der Art, die von einem Stelzen-Motorfahrzeug getragen wird und ein bewegliches Gestell (10) umfaßt, das von einem Stelzen-Gestell getragen wird, wobei das bewegliche Gestell (10) Mittel (21), die das Aussenden eines Signals bewirken, wenn sie in Kontakt mit einer Pflanze (A) kommen, Mittel zum Erfassen der Lage des Mittels, das in Kontakt mit der Pflanze steht, und Mittel aufweist, die ein Werkzeug (30) vertikal zur so lokalisierten Pflanze verbringen, **dadurch gekennzeichnet, daß** das Fahrzeug eine Querreihe von vertikalen Fühlern (21) trägt, deren unteres Ende sich in gleicher Höhe mit dem Boden befindet, wobei diese Fühler (21) nebeneinander in analoger Weise wie bei einem Kamm angeordnet sind, und ihr Abstand klein genug ist, damit eine Pflanze, die aus dem Boden ragt, nicht zwischen zwei benachbarten Fühlern (21) durchgehen kann, wobei jeder Fühler (21) sich nach hinten verschieben kann, wenn er in physischen Kontakt mit einer Pflanze kommt, und das Trägerfahrzeug einerseits mit Mitteln, die es gestatten, den Fühler (21) zu bestimmen, der von der Pflanze verschoben wurde, und andererseits mit Mitteln zur Horizontal- und Längsverschiebung versehen ist, die ein Emtewerkzeug (30) tragen, um es vertikal zur vom Fühler (21) detektierten Pflanze zu führen.

2. Maschine nach Anspruch 1, **dadurch gekennzeichnet, daß** der Abstand der Fühler in der Größenordnung von 1 mm liegt.

3. Maschine nach Anspruch 2, **dadurch gekennzeichnet, daß** sie zum Ernten von Spargel vorgesehen ist, der in im wesentlichen trapezförmigen Hügelbeeten (2) gezüchtet wird, die zwei im wesentlichen schräge Seitenwände (3) und eine obere Wand (4), die praktisch eben ist und aus der die Spargelpflanzen hervorragen, umfassen.

4. Maschine nach Anspruch 3, bei der die Fühler, die ein Signal aussenden, wenn sie an einen Spargel oder an eine Pflanze stoßen, aus einer Reihe von vertikalen Stäben (21) gebildet sind, die so getragen werden, daß sie einen Kamm bilden, derart, daß ein Stab (21), wenn er gegen einen Spargel stößt, nach hinten zurückweicht.

5. Maschine nach Anspruch 4, bei der die vertikalen Stäbe (21), die nebeneinander angeordnet sind, von einer Quer- und Horizontalwelle (20) getragen werden, die ihrerseits so am Gestell (10) getragen wird, daß ein Stab (21), wenn er eine Pflanze berührt, nach hinten umgeklappt wird.

6. Maschine nach Anspruch 5, bei welcher der Stab (21) beim Umklappen auf einen Kontakt einwirkt, der feststellt, welche der Stäbe umgeklappt wurde, und damit die Position des Spargels bestimmt.

7. Maschine nach Anspruch 5, bei welcher der Stab (21), indem er nach hinten umklappt, ein Signal erzeugt, welches das Anhalten der Maschine, z. B. mittels einer photoelektrischen Zelle, bewirkt.

8. Maschine nach Anspruch 7, bei der das Signal, welches das Anhalten der Maschine bewirkt hat, einen Wagen (18) betätigt, der sich entlang der Reihe von Stäben (21) bewegt, um denjenigen zu ermitteln, der umgeklappt wurde.

9. Maschine nach Anspruch 8, bei welcher der in Querrichtung verschiebliche Wagen (18) einen Näherungsschalter (26) trägt, um den Stab (21) zu detektieren, der umgeklappt wurde, wobei dieses Mittel, wenn es den Stab (21) detektiert hat, ein Signal aussendet, das den Wagen (18) anhält.

10. Maschine nach einem der Ansprüche 1 bis 9, bei der jeder Stab (21) an seinem unteren Teil einen vertikalen Flügel (22), der mit einem Spargel in Kontakt treten soll, und an seinem oberen Teil einen horizontalen Flügel (23) aufweist, der von einem Näherungsschalter (26) detektiert werden soll.

11. Maschine nach Anspruch 10, bei der die unteren Flügel (22) eine Breite haben, die dergestalt ist, daß sie zwischeneinander nur ein kleines Spiel in der Größenordnung von 1 bis 2 mm zulassen.

12. Maschine nach einem der vorhergehenden Ansprüche, bei der der Wagen (18) ein Werkzeug (30) zum Ernten des Spargels trägt, wobei dieses Werkzeug am unteren Ende eines Rohres (29) getragen wird, das in einem vertikalen Rohr (28) gleitet, welches vom Wagen (18) getragen wird.

13. Maschine nach Anspruch 12, bei der das Werkzeug (30) von dem Wagen (18) so getragen wird, daß es in einem Abstand "d" vor der Reihe von Stäben und Flügeln (21, 22) angeordnet ist.

14. Maschine nach Anspruch 13, bei der, wenn die Lage des umgeklappten Stabes (21) durch Anhalten der seitlichen Verschiebung des Wagens (18) festgestellt wurde, ein Signal die Verschiebung des Gestells (10) um den Abstand "d" nach hinten bewirkt, so daß das Werkzeug (30) sich vertikal zur Pflanze oder zum Spargel (A) befindet.

15. Maschine nach Anspruch 5, bei welcher die Stäbe (21) mit einem Gegengewicht (33) versehen sind, dessen Stellung so einstellbar ist, daß es den umgeklappten Stab mit einer Rückstellkraft beaufschlagt.

16. Maschine nach Anspruch 4, bei der die vertikalen, nebeneinander angeordneten Stäbe (21), die einen Kamm bilden, jeweils von einer Muffe (36) getragen werden, die entlang einer Tragachse (35) gleiten kann, die horizontal und parallel zur Längsachse verläuft, wobei sie gleichzeitig durch die Wirkung einer Rückstellfeder (37) beaufschlagt werden.

17. Maschine nach Anspruch 4, bei der die vertikalen, nebeneinander angeordneten Stäbe (21), die einen Kamm bilden, jeweils von einem verformbaren Parallelogramm (21, 40, 41, 42) getragen werden.

18. Maschine nach Anspruch 17, bei der das verformbare Parallelogramm (21, 40, 41, 42) mit einer Rückstellkraft beaufschlagt wird, die von einem Gegengewicht (43) mit einstellbarer Stellung oder von einer Feder (45) ausgeübt wird.

19. Maschine nach einem der vorhergehenden Ansprüche, bei der das Gestell (10) auf zwei Schienen (11) verschieblich montiert ist, die von dem Stelzen-Gestell getragen werden, wobei die Verschiebung des Gestells (10) auf den Schienen (11) durch zwei Zylinder (13) oder etwas Analoges gesteuert wird.

20. Maschine nach Anspruch 19, bei der das bewegliche Gestell (10) durch zwei Schlitten (12) gebildet wird, die entlang der Schienen (11) gleiten können, wobei jeder Schlitten (12) einen vorderen Träger (14b) und einen hinteren Träger (14a) trägt und die Trägerpaare (14a und 14b) zwei Querschienen (15 und 16) tragen, auf denen sich Räder (17) bewegen, die den Wagen (18) tragen.

21. Maschine nach Anspruch 20, bei der die beiden hinteren Träger (14a) einen horizontalen höhenverstellbaren Querträger tragen, wobei dieser Querträger die Querachse (20) trägt, an der die Stangen (21) verschwenkbar montiert sind.

22. Maschine nach einem der vorhergehenden Ansprüche, bei der jeder Flügel (22), der am unteren Ende eines Stäbes (21) angeordnet ist, mit mindestens einem und vorzugsweise zwei steifen Hohlrohren (31) versehen ist, die mit Druckluft versorgt werden.

23. Maschine nach Anspruch 22, bei der die Rohre (31) mehrere Millimeter über die Unterseite jedes Flügels hinausragen, wobei der Querschieber (19) so eingestellt ist, daß sich die Rohre mehrere Millimeter in den Boden versenken und die Druckluftstrahlen den Sand wegblasen sowie die Spargel über eine Tiefe von etwa einem Zentimeter freilegen.

24. Maschine nach den Ansprüchen 22 und 23, bei der jeder Flügel (22) an seiner Rückseite zwei starre Stäbe (34) trägt, die relativ zum Flügel (22) höhenverstellbar sind, wobei die Druckluft-Zuführrohre (31) hinter den starren Stäben (34) angeordnet sind.

25. Maschine nach Anspruch 15, bei der die starren Stäbe (34) so eingestellt sind, daß sie sich etwa 1 cm/1,5 cm in den Boden versenken, wobei die Rohre (31) nach vorne hin derart schräg angeordnet sind, daß die Druckluft auf die Enden der Stäbe (34) geblasen wird, die eine Wulst (34a) umfassen können.

26. Maschine nach einem der vorhergehenden Ansprüche, bei der die Enden der Flügel (22) so ausgerichtet sind, daß sie parallel zur flachen Krone (4) des Hügelbeetes verlaufen.

27. Maschine nach Anspruch 26, die auf beiden Seiten der horizontalen Reihe von Flügeln (22) Stäbe (21) umfaßt, die länglich derart ausgebildet sind, daß die von diesen länglichen Stäben (21) getragenen Flügel (22) sich der Neigung der schrägen Wände (3) anpassen können.

## Claims

1. A machine for automated harvesting of plants growing in the ground, whether in beds or in ridges, of the type carried by a straddling power-driven vehicle and comprising a mobile frame (10), carried by a straddling frame, said mobile frame (10) comprising means (21) which cause the emission of a signal when they arrive in contact with a plant (A), means which detect the position of the means which is in contact with said plant and means which bring a tool (30) into a position vertically above the plant thus located, **characterised in that** said vehicle carries a transverse row of vertical feelers (21) whose lower end is level with the ground, these feelers (21) being positioned side by side similar to a comb, their spacing being sufficiently small for a plant protruding from the ground not to be able to pass between two neighbouring feelers (21), each feeler (21) being capable of moving backwards when it comes into physical contact with a plant, the carrying vehicle comprising on the one hand means making it possible to determine which feeler (21) has been moved by the plant and on the other hand means carrying a picking tool (30) and effecting horizontal and longitudinal displacement so as to bring it into a position vertically above the plant detected by the feeler (21).

2. A machine according to claim 1, **characterised in that** said spacing of the feelers is of the order of 1 mm.

3. A machine according to claim 2, **characterised in that** it is designed for harvesting asparagus grown in substantially trapezoidal ridges (2) comprising two substantially oblique side faces (3) and a virtually flat top face (4) from which the asparagus protrudes.

4. A machine according to claim 3, in which the feelers which emit a signal on contact with an asparagus or other plant consist of a row of vertical rods (21) carried in such a way as to form a comb, such that when a rod (21) hits an asparagus plant it moves backwards.

5. A machine according to claim 4, in which the juxtaposed vertical rods (21) are carried by a transverse, horizontal shaft (20) which is itself carried by the frame (10) in such a way that when a rod (21) hits a plant it swings backwards.

6. A machine according to claim 5, in which the rod (21), on swinging, acts on a contact which determines which rod it is which has swung and thus the position of the asparagus.

7. A machine according to claim 5, in which the rod (21), on swinging backwards, generates a signal which causes the machine to stop, for example by means of a photoelectric cell.

8. A machine according to claim 7, in which the signal, having caused the machine to stop, sets in action a carriage (18) which moves along the row of rods (21) to detect the one which has swung.

9. A machine according to claim 8, in which the transversely mobile carriage (18) carries a proximity detector (26) for detecting the rod (21) which has swung, said means emitting a signal immobilising the carriage (18) when it has detected the rod (21).

10. A machine according to any one of claims 1 to 9, in which each rod (21) comprises at its bottom part a vertical blade (22) designed to come into contact with an asparagus plant and at its top part a horizontal blade (23) designed to be detected by a proximity detector (26).

11. A machine according to claim 10, in which the lower blades (22) have a width such that they leave only a minute amount of play between them, of the order of 1 to 2 mm.

12. A machine according to any one of the preceding claims, in which the carriage (18) carries a tool (30) for picking the asparagus, said tool being carried at the lower end of a tube (29) sliding in a vertical tube (28) carried by the carriage (18).

13. A machine according to claim 12, in which the tool (30) is carried by the carriage (18) in such a way as to be situated at a distance "d" in front of the row of rods and blades (21, 22).

14. A machine according to claim 13, in which, when the position of the rod (21) which has swung has been determined through stopping of the lateral displacement of the carriage (18), a signal causes rearward displacement of the frame (10) by said distance "d" so that the tool (30) is located vertically above the plant or asparagus (A).

15. A machine according to claim 5, in which the rods (21) are provided with a counterweight (33), whose position is adjustable in order to exert a return force on the rod which has been moved.

16. A machine according to claim 4, in which the juxtaposed vertical rods (21), forming a comb, are each carried by a sleeve (36) capable of sliding along a horizontal carrier shaft (35) parallel to the longitudinal axis while being acted upon by a return spring (37).

17. A machine according to claim 4, in which the juxtaposed vertical rods (21), forming a comb, are each carried by a deformable parallelogram (21, 40, 41, 42).

18. A machine according to claim 17, in which the deformable parallelogram (21, 40, 41, 42) is subjected to a return force exerted either by an adjustable-position counterweight (43) or by a spring (45).

19. A machine according to any one of the preceding claims, in which the frame (10) is mounted slidingly on two rails (11) carried by the straddling frame, the sliding of the frame (10) on its rails (11) being controlled by two jacks (13) or the like.

20. A machine according to claim 19, in which the mobile frame (10) consists of two slides (12) capable of sliding along the rails (11), each slide (12) carrying a front strut (14b) and a rear strut (14a), the pairs of struts (14a and 14b) carrying two transverse rails (15 and 16) on which move wheels (17) carrying the carriage (18).

21. A machine according to claim 20, in which the two rear struts (14a) carry a height-adjustable horizontal transverse strut, said transverse strut carrying the transverse shaft (20) on which the rods (21) are mounted pivotally.

22. A machine according to any one of the preceding claims, in which each blade (22) situated at the base of a rod (21) is provided with at least one and preferably two rigid hollow tubes (31) supplied with compressed air.

23. A machine according to claim 22, in which the tubes (31) extend several millimetres beyond the base of each blade, the transverse strut (19) being adjusted in such a way that they dig several millimetres into the ground, the jets of compressed air driving away the sand and exposing the roots of the asparagus plants to a depth of approximately one centimetre.

24. A machine according to claims 22 and 23, in which each blade (22) carries, on its rear face, two rigid rods (34), whose position may be adjusted heightwise relative to the blade (22), the compressed air supply pipes (31) being positioned behind the rigid rods (34).

25. A machine according to claim 15, in which the rigid rods (34) are adjusted in such a way as to dig approximately 1 cm/1.5 cm into the ground, the tubes (31) sloping obliquely forwards in such a way that the compressed air is blown onto the ends of the rods (34), which may comprise a flange (34a).

26. A machine according to any one of the preceding claims, in which the ends of the blades (22) are aligned to be parallel with the flat crown (4) of the ridge.

27. A machine according to claim 26, comprising on each side of the horizontal row of blades (22) rods (21) which are elongated such that the blades (22) carried by these elongate rods (21) may follow the slope of the oblique faces (3).
